# EUROPEAN PATENT APPLICATION

(11) **EP 3 851 914 A1**
(43) Date of publication of application: **21.07.2021**
(21) Application number: 21150251.3
(22) Date of filing: 05.01.2021
(51) Int. Cl.: G03B 21/20, G02B 5/04, G02B 7/18

(54) **OPTO-MECHANICAL MODULE AND PROJECTION DEVICE**

(30) Priority: 15.01.2020 CN 202020078981 U
(71) Applicant: Coretronic Corporation, Hsin-Chu 300 (TW)
(72) Inventor: WEI, CHUNG-TING, 300 Hsinchu (TW); CHENG, CHUAN-TE, 300 Hsinchu (TW)
(74) Representative: Ter Meer Steinmeister & Partner

(57) **Abstract**

An opto-mechanical module, including a light valve, and first and second prisms is provided. The light valve and the first prism are disposed on a transmission path of the illumination beam. The second prism is disposed on transmission paths of the illumination and image beams, and located between the light valve and the first prism. The first prism does not overlap with the light valve in an extension direction of the reflection surface parallel to the light valve. The illumination beam does not pass through an optical element or a fixing glue on a transmission path between the first and second prisms. The shortest distance from an intersection point of the illumination beam entering the first prism to the light valve is smaller than that from an intersection point of the image beam exiting the second prism to the light valve. A projection device including the opto-mechanical module is provided.

## Description

This application claims the priority of China application serial no. 202020078981.2, filed on January 15, 2020.

### BACKGROUND

### Technical Field

The disclosure relates to an optical device, and more particularly to an opto-mechanical module and a projection device.

### Description of Related Art

The projection device is a display device for generating large-size images. With the evolution and innovation of science and technology, the projection device has also been continuously improving. The imaging principle of the projection device is to convert an illumination beam generated by an illumination system into an image beam by an opto-mechanical module, and then project the image beam to a projection target (such as a screen or a wall) through a projection lens to form a projection image.

In the current structure of the opto-mechanical module, at least two total internal reflection prisms are disposed on the light transmission path, such that a beam may be transmitted to a light valve and then transmitted out of a projection device. Also, adjacent total internal reflection prisms are adhered by a light-transmitting spacer and / or an edge dispenser disposed in the total internal reflection prisms. However, prism adhered by the light-transmitting spacer and / or the edge dispenser cannot tolerate relatively harsh test conditions, such as vibration tests at high temperatures. In order to enhance the environmental tolerance conditions, the size of the prism set must be increased to increase the adherence area of the light-transmitting spacer. However, the cost will be increased and the size of the prism set will be too large, thereby affecting the configuration of the light valve or the optical effect thereof.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

The disclosure provides an opto-mechanical module and a projection device, which can simplify the assembling difficulty of a prism set while maintaining a good optical effect.

The object is solved by the features of the independent claims. Preferred embodiments are given in the dependent claims.

Other objectives and advantages of the disclosure can be further understood from the technical features disclosed by the disclosure.

In order to achieve one, part of, or all of the objectives or other objectives, an embodiment of the disclosure provides an opto-mechanical module for converting an illumination beam into an image beam. The opto-mechanical module includes a light valve, a first prism, and a second prism. The light valve has a reflection surface and is disposed on a transmission path of the illumination beam. The first prism is disposed on the transmission path of the illumination beam. The second prism is disposed on transmission paths of the illumination beam and the image beam, and is located between the light valve and the first prism. The illumination beam is sequentially transmitted through the first prism, the second prism, and the light valve to form an image beam, and the image beam is transmitted out of the opto-mechanical module by the second prism. In an extension direction of the reflection surface parallel to the light valve, the first prism does not overlap with the light valve, and the illumination beam does not pass through an optical element or a fixing glue on a transmission path between the first prism and the second prism. The shortest distance from an intersection point of the center ray of the illumination beam entering the first prism to the light valve is smaller than the shortest distance from an intersection point of the center ray of the image beam exiting the second prism to the light valve.

In order to achieve one, part, or all of the objectives or other objectives, another embodiment of the disclosure provides a projection device including an illumination system, an opto-mechanical module, and a projection lens. The illumination system is configured to provide an illumination beam. The opto-mechanical module is disposed on a transmission path of the illumination beam and is configured to convert the illumination beam into an image beam. The opto-mechanical module includes a light valve, a first prism, and a second prism. The light valve has a reflection surface disposed on the transmission path of the illumination beam. The first prism is disposed on the transmission path of the illumination beam. The second prism is disposed on transmission paths of the illumination beam and the image beam, and is located between the light valve and the first prism. The projection lens is disposed on a transmission path of the image beam and is configured to convert the image beam into a projection beam. The illumination beam is sequentially transmitted through the first prism, the second prism, and the light valve to form the image beam, and the image beam is transmitted out of the opto-mechanical module by the second prism. In an extension direction of the reflection surface parallel to the light valve, the first prism does not overlap with the light valve, and the illumination beam does not pass through an optical element or a fixing glue on a transmission path between the first prism and the second prism. The shortest distance from an intersection point of the center ray of the illumination beam entering the first prism to the light valve is smaller than the shortest distance from an intersection point of the center ray of the image beam exiting the second prism to the light valve.

In some or more embodiments, one of the first prism and the second prism may have an integrally formed assembly part.

Preferably, the one of the first prism and the second prism having the assembly part may be connected to a casing by the assembly part.

Preferably, by the assembly part being connected to the casing a spacing between the first prism and the second prism may be formed.

Preferably, the casing may be configured to bear the opto-mechanical module.

In some or more embodiments, a material of the one of the first prism and the second prism having the assembly part may be plastic and a material of the other one of the first prism and the second prism not having the assembly part may be glass.

In some or more embodiments, one of the first prism and the second prism may have an integrally formed positioning part.

In some or more embodiments, the one of the first prism and the second prism having the positioning part may be connected to the other one of the first prism and the second prism by the positioning part, thereby forming a spacing between the first prism and the second prism.

In some or more embodiments, a material of the one of the first prism and the second prism having the positioning part may be plastic and a material of the other one of the first prism and the second prism not having the positioning part may be glass.

In some or more embodiments, the second prism may comprise an adjacent surface adjacent to the first prism.

In some or more embodiments, a shortest distance from an intersection point of a center ray of the illumination beam at the adjacent surface to the first prism may be greater than 0.5 mm.

In some or more embodiments, the first prism may have a first surface, a second surface, and a third surface.

In some or more embodiments, the illumination beam may be transmitted from the first surface into the first prism, and may be then transmitted to and exits the second surface by reflection of the second surface and the third surface in sequence.

In some or more embodiments, a refractive power of the third surface may be positive.

In some or more embodiments, the second prism may have an adjacent surface, a fourth surface, and a fifth surface.

In some or more embodiments, the illumination beam may be transmitted from the adjacent surface into the second prism and exits the fourth surface to be transmitted to the light valve.

In some or more embodiments, the image beam may be transmitted from the fourth surface into the second prism to be reflected by the adjacent surface to the fifth surface and transmitted out of the second prism.

In some or more embodiments, the second prism may comprise an adjacent surface adjacent to the first prism.

In some or more embodiments, an included angle between the second surface and the adjacent surface may be greater than 4 degrees.

Based on the above, the embodiments of the disclosure have at least one of the following advantages or effects. In the opto-mechanical module and the projection device of the disclosure, the opto-mechanical module includes the light valve, the first prism, and the second prism, and the first prism does not overlap with the light valve in the extension direction of the reflection surface parallel to the light valve. The illumination beam does not pass through an optical element or a fixing glue on the transmission path between the first prism and the second prism. The shortest distance from the intersection point of the center ray of the illumination beam entering the first prism to the light valve is smaller than the shortest distance from the intersection point of the center ray of the image beam exiting the second prism to the light valve. Therefore, when assembling the opto-mechanical module, it is not required to dispose connection means such as a light-transmitting spacer or a fixing dispenser in advance to assemble the first prism and the second prism to each other to form a component, and it is not required to form the spacing by another spacer. In this way, the assembling difficulty of the prism set can be simplified while maintaining a good optical effect.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic view of a projection device of an embodiment of the disclosure.
FIG. 2 is a schematic view of one side of a portion of an opto-mechanical module of an embodiment of the disclosure.
FIG.3 a schematic view of the other side of the portion of the opto-mechanical module of FIG.2.
FIG. 4 is a schematic view of one side of a portion of an opto-mechanical module of another embodiment of the disclosure.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

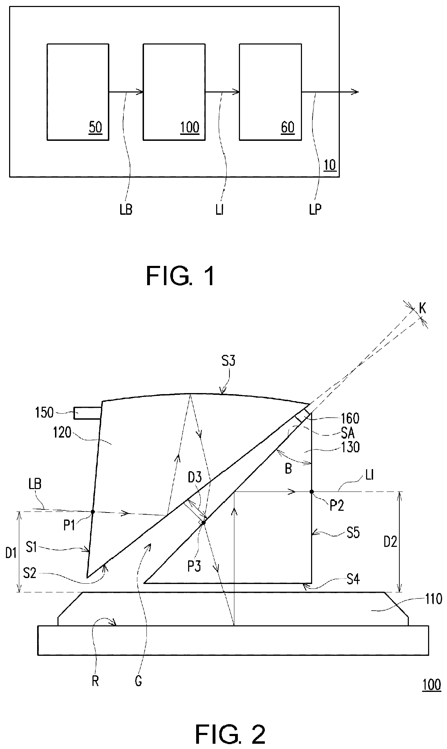

FIG. 1 is a schematic view of a projection device according to an embodiment of the disclosure. Please refer to FIG. 1. The embodiment provides a projection device 10 including an illumination system 50, an opto-mechanical module 100, and a projection lens 60. The illumination system 50 is configured to provide an illumination beam LB. The opto-mechanical module 100 is disposed on a transmission path of the illumination beam LB and is configured to convert the illumination beam LB into an image beam LI. The projection lens 60 is located on a transmission path of the image beam LI and is configured to convert the image beam LI into a projection beam LP, and the projection beam LP is projected to a projection target (not shown), such as a screen or a wall.

The illumination system 50 may be, for example, formed from a combination of a plurality of light emitting elements, a wavelength conversion element, a light homogenizing element, a filter element, and a plurality of light splitting and combining elements, and is configured to provide light of different wavelengths as a source of image light. However, the disclosure does not limit the type or form of the illumination system 50 in the projection device 10. Sufficient teachings, suggestions, and implementation descriptions of the detailed structure and implementation methods of the illumination system 50 may be obtained from common knowledge in the art, so there will be no reiteration.

The projection lens 60 includes, for example, a combination of one or more optical lenses having refractive power, such as various combinations of non-planar lenses such as a biconcave lens, a biconvex lens, a concave-convex lens, a convex-concave lens, a plano-convex lens, and a plano-concave lens. In an embodiment, the projection lens 60 may further include a planar optical lens to convert the image beam LI from the opto-mechanical module 100 into a projection beam LP in a reflective manner and project the projection beam LP to a projection target. The disclosure does not limit the form and type of the projection lens 60.

FIG. 2 is a schematic view of one side of a portion of an opto-mechanical module according to an embodiment of the disclosure. Please refer to FIG. 1 and FIG. 2. The opto-mechanical module 100 includes a light valve 110, a first prism 120, and a second prism 130. The light valve 110 has a reflection surface R and is disposed on the transmission path of the illumination beam LB. In the embodiment, the light valve 110 is, for example, a reflective optical modulator such as a liquid crystal on silicon panel (LCoS panel), a digital micro-mirror device (DMD), etc. In some embodiments, the light valve 110 may also be a transmissive optical modular such as a transparent liquid crystal panel, an electro-optic modulator, a magneto-optic modulator, an acousto-optic modulator (AOM), etc. The disclosure does not limit the form and type of the light valve 110. Sufficient teachings, suggestions, and implementation explanations of the detailed steps and implementation methods of the method of converting the illumination beam LB into the image beam LI by the light valve 110 may be obtained from common knowledge in the art, so there will be no reiteration. In the embodiment, the quantity of the light valve 110 is one, for example, a projection device 10 using a single DMD, but in other embodiments, the quantity may be multiple, and the disclosure is not limited thereto.

The first prism 120 is disposed on the transmission path of the illumination beam LB, and the second prism 130 is disposed on transmission paths of the illumination beam LB and the image beam LI. The second prism 130 is located between the light valve 110 and the first prism 120. The illumination beam LB is sequentially transmitted through the first prism 120, the second prism 130, and the light valve 110 to form the image beam LI, and the image beam LI is transmitted out of the opto-mechanical module 100 by the second prism 130.

Specifically, the first prism 120 has a first surface S1, a second surface S2, and a third surface S3. The second prism 130 has an adjacent surface SA adjacent to the first prism 120 (for example, the adjacent surface SA adjacent to the second surface S2), a fourth surface S4, and a fifth surface S5. The second surface S2 of the first prism 120 and the adjacent surface SA of the second prism 130 are not parallel to each other. The third surface S3 in the first prism 120 has a positive refractive power. The third surface S3 is, for example, a spherical surface, an aspherical surface, or a surface with diffractive function, and the disclosure is not limited thereto. In addition, in the embodiment, the fourth surface S4 of the second prism 130 is parallel to the reflection surface R of the light valve 110 (for example, an active array surface of the light valve 110), and an included angle K between the second surface S2 of the first prism 120 and the adjacent surface SA of the second prism 130 is greater than 4 degrees (the included angle here refers to the included angle between two planes or the included angle of planes extended outwards from the two planes). In the embodiment, the second prism 130 is, for example, a 45-degree total internal reflection prism, the fourth surface S4 and the fifth surface S5 are at right angles, an included angle B between the adjacent surface SA and the fifth surface S5 is 45 degrees, and an included angle between the fourth surface S4 and the adjacent surface SA is also 45 degrees, but the disclosure is not limited thereto.

In terms of optical path, the illumination beam LB is transmitted from the first surface S1 into the first prism 120, is then transmitted to the second surface S2 by reflection of the second surface S2 and the third surface S3 in sequence, and is emitted from the second surface S2 to be transmitted to the second prism 130. The illumination beam LB is transmitted from the adjacent surface SA of the second prism 130 into the second prism 130 and is emitted from the fourth surface S4 to be transmitted to the light valve 110 for conversion into the image beam LI. The image beam LI is transmitted from the fourth surface S4 into the second prism 130 to be reflected by the adjacent surface SA to the fifth surface S5, and finally exits the second prism 130 from the fifth surface S5.

The direction of the illumination beam LB entering the first prism 120 is substantially the same as the direction of the image beam LI exiting the second prism 130. It is worth mentioning that in the embodiment, a shortest distance D1 from an intersection point P1 of the center ray (that is, the path of the illumination beam LB shown in FIG. 2) of the illumination beam LB entering the first prism 120 to the light valve 110 is smaller than a shortest distance D2 from an intersection point P2 of the center ray (that is, the path of the image beam LI shown in FIG. 2) of the image beam LI exiting the second prism 130 to the light valve 110. Also, in an extension direction parallel to the reflection surface R of the light valve 110, the first prism 120 does not overlap with the light valve 110 (in other word, a projection region of the light valve 110 on a plane perpendicular to the reflection surface R does not overlap with a projection region of the first prism 120 on the plane). It is particularly noted that the extension direction parallel to the reflection surface R of the light valve 110 refers to all directions parallel to the reflection surface R. Therefore, the light valve 110 does not need to be limited to be disposed in a limited space because of the geometrical structure of the first prism 120.

In addition, in the embodiment, the illumination beam LB does not pass through any optical element or any fixing glue on a transmission path between the first prism 120 and the second prism 130. Furthermore, the ray of the illumination beam LB in the embodiment does not pass through any optical element other than the first prism 120, the second prism 130, and the light valve 110 in the opto-mechanical module 100. It is particularly noted that the ray here does not include rays of scattering, diffusion, etc. In other words, the first prism 120 and the second prism 130 do not have a component such as a light-transmitting spacer therebetween or are not adhered by a light-transmitting glue. Therefore, when assembling the opto-mechanical module 100 in the embodiment, it is not required to dispose connection means such as a light-transmitting spacer or a fixing glue in advance to assemble the first prism 120 and the second prism 130 to each other to form a component. In this way, the assembling of the first prism 120 and the second prism 130 can be simplified while maintaining a good optical effect. In the embodiment, a shortest distance D3 from an intersection point P3 of the center ray of the illumination beam LB at the adjacent surface SA of the second prism 130 to the first prism 120 is greater than 0.5 mm. In other words, a spacing G between the first prism 120 and the second prism 130 is greater than the conventional distance between two prisms and is of a different order of magnitude.

For example, in an embodiment, one of the first prism 120 and the second prism 130 has an integrally formed assembly part 150, that is, the assembly part 150 is integrally formed with the prism body. Also, the one of the first prism 120 and the second prism 130 having the assembly part 150 is connected to an external element, such as a casing (not shown) bearing the opto-mechanical module 100, by the assembly part 150, but the disclosure is not limited thereto. Any external element usable for fixing may be used as the casing, which is configured to bear the opto-mechanical module 100. For example, as shown in FIG. 2, the first prism 120 has the integrally formed assembly part 150, and the material of the first prism 120 is plastic and the material of the second prism 130 may be glass. In this way, the first prism 120 is connected to the casing by the assembly part 150, such that a spacing G is formed between the first prism 120 and the second prism 130, and it is not required to form the spacing G by another spacer. In the embodiment, the second prism 130 may be disposed in an accommodating space planned in advance in the casing and it is not required to dispose any assembly part. However, in different embodiments, the second prism 130 may also have an integrally formed assembly part to be connected to the casing, and the disclosure is not limited thereto. It is particularly noted that the assembly part 150 is shown as only one element in FIG. 2, but the disclosure is not limited thereto. In other embodiments, the assembly part 150 may include a plurality of elements and the shape of the assembly part 150 is also not particularly limited.

In another embodiment, one of the first prism 120 and the second prism 130 has an integrally formed positioning part 160, that is, the positioning part 160 is integrally formed with the prism body. Also, the one of the first prism 120 and the second prism 130 having the positioning part 160 is connected to the other one of the first prism 120 and the second prism 130 by the positioning part 160. For example, as shown in FIG. 2, the first prism 120 has the integrally formed positioning part 160, and the material of the first prism 120 is plastic and the material of the second prism 130 may be glass. In this way, the first prism 120 is connected to or leaning on the second prism 130 by the positioning part 160, such that a spacing G is formed between the first prism 120 and the second prism 130 and it is not required to form the spacing G by another spacer. It is particularly noted that in the disclosure, the positioning part 160 may choose to lean on only the adjacent surface SA of the second prism 130 or simultaneously lean on both the adjacent surface SA and the fifth surface S5 of the second prism 130, and the disclosure is not limited thereto. In the embodiment, the second prism 130 may be disposed in an accommodating space planned in advance in the casing. However, in different embodiments, the second prism 130 may also have an integrally formed positioning part to be connected to the first prism 120, and the disclosure is not limited thereto. In other embodiments, the first prism 120 and / or the second prism 130 may simultaneously have the assembly part 150 and the positioning part 160.

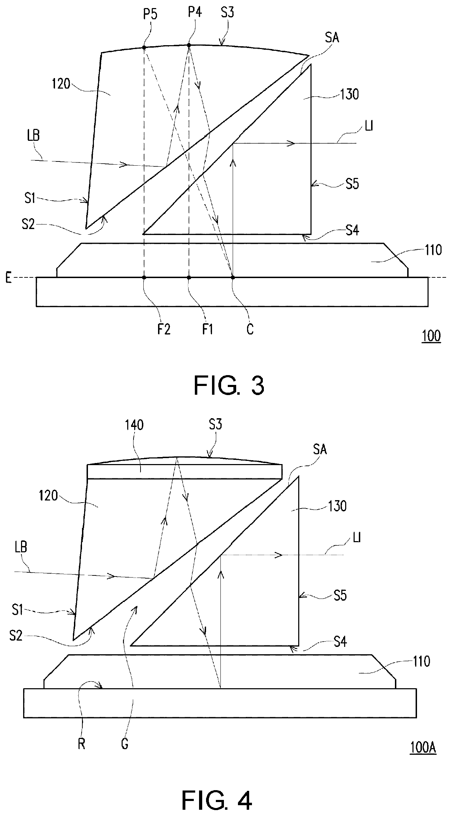

FIG. 3 is a schematic view of the other side of the portion of the opto-mechanical module of FIG. 2. Please refer to FIG. 2 and FIG. 3. For ease of description, the opto-mechanical module 100 shown in FIG. 3 omits the illustration of a portion of the intersection point, the assembly part, and the positioning part. The differences between the two are only a portion of the reference numerals. In addition, in the embodiment, the light valve 110 is, for example, a digital micro-mirror device (DMD), which may include a plurality of rotatable micro-mirrors (not shown). Also, a projection location F1 of an intersection point P4 of the center ray of the illumination beam LB transmitted to the third surface S3 of the first prism 120 on a plane E parallel to the light valve 110 (for example, an active array surface of the light valve 110) is located between a projection position F2 of an intersection point P5 from a center point C of the light valve 110 along the maximum tilt angle of the rotatable micro-mirror to of the third surface S3 on the plane E and the location (projection position on the plane E) of the center point C of the light valve 110. In other words, the maximum tilt angle of the rotatable micro-mirror of the light valve 110 is greater than the tilt angle of the connection line between the intersection point P4 of the illumination beam LB on the third surface S3 and the center point C of the light valve 110. It is particularly noted that the maximum tilt angle (tilt angle) of the rotatable micro-mirror refers to the angle of the normal of the reflection surface of the rotatable micro-mirror relative to the normal of the plane E, and the tilt angle of the connection line refers to the angle of the connection line relative to the normal of the plane E.

FIG. 4 is a schematic view of one side of a portion of an opto-mechanical module according to another embodiment of the disclosure. Please refer to FIG. 4. An opto-mechanical module 100A shown in this embodiment is similar to the opto-mechanical module 100 shown in FIG. 2. The difference between the two is that, in this embodiment, the opto-mechanical module 100A further includes a curved reflection element 140, disposed on a first prism 120 and is configured to reflect an illumination beam LB to be transmitted out of the first prism 120. In other words, in this embodiment, the third surface S3 shown in FIG. 2 may be formed and replaced by additionally disposing the curved reflection element 140. In this way, the manufacturing method of the first prism 120 can be simplified, and the material of the first prism 120 may be further chosen as glass to improve the overall optical effect.

Based on the above, the embodiments of the disclosure have at least one of the following advantages or effects. In the opto-mechanical module and the projection device of the disclosure, the opto-mechanical module includes the light valve, the first prism, and the second prism, and the first prism does not overlap with the light valve in the extension direction of the reflection surface parallel to the light valve. The illumination beam does not pass through an optical element or a fixing glue on the transmission path between the first prism and the second prism. The shortest distance from the intersection point of the center ray of the illumination beam entering the first prism to the light valve is smaller than the shortest distance from the intersection point of the center ray of the image beam exiting the second prism to the light valve. Therefore, when assembling the opto-mechanical module, it is not required to dispose connection means such as a light-transmitting spacer or a fixing dispenser in advance to assemble the first prism and the second prism to each other to form a component, and it is not required to form the spacing by another spacer. In this way, the assembling difficulty of the prism set can be simplified while maintaining a good optical effect.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. An opto-mechanical module (100), for converting an illumination beam (LB) into an image beam (IB), the opto-mechanical module (100) comprising a light valve (110), a first prism (120), and a second prism (130),
wherein the light valve (110) has a reflection surface (R) and is disposed on a transmission path of the illumination beam (LB);
the first prism (120) is disposed on the transmission path of the illumination beam (LB); and
the second prism (130) is disposed on transmission paths of the illumination beam (LB) and the image beam (IB), and is located between the light valve (110) and the first prism (120),
wherein the illumination beam (LB) is sequentially transmitted through the first prism (120), the second prism (130) and the light valve (110) to form the image beam (IB), and
the image beam (IB) is transmitted out of the opto-mechanical module (100) by the second prism (130),
wherein the first prism (120) does not overlap with the light valve (110) in an extension direction parallel to the reflection surface (R) of the light valve (110), and
the illumination beam (LB) does not pass through an optical element or a fixing glue on a transmission path between the first prism (120) and the second prism (130).

2. The opto-mechanical module (100) according to claim 1, wherein a shortest distance from an intersection point of a center ray of the illumination beam (LB) entering the first prism (120) to the light valve (110) is smaller than a shortest distance from an intersection point of a center ray of the image beam (IB) exiting the second prism (120) to the light valve (110).

3. The opto-mechanical module (100) according to claim 1 or 2, wherein one of the first prism (120) and the second prism (130) has an integrally formed assembly part (150).

4. The opto-mechanical module (100) according to claim 3, wherein the one of the first prism (120) and the second prism (130) having the assembly part (150) is connected to a casing by the assembly part (150), thereby forming a spacing (G) between the first prism (120) and the second prism (130), and the casing is configured to bear the opto-mechanical module (100).

5. The opto-mechanical module (100) according to claim 3 or 4, wherein a material of the one of the first prism (120) and the second prism (130) having the assembly part (150) is plastic, and a material of the other one of the first prism (120) and the second prism (130) not having the assembly part (150) is glass.

6. The opto-mechanical module (100) according to any one of the preceding claims, wherein one of the first prism (120) and the second prism (130) has an integrally formed positioning part (160).

7. The opto-mechanical module (100) according to claim 6, the one of the first prism (120) and the second prism (130) having the positioning part (160) is connected to the other one of the first prism (120) and the second prism (130) by the positioning part (160), thereby forming a spacing (G) between the first prism (120) and the second prism (130).

8. The opto-mechanical module (100) according to claim 6 or 7, wherein a material of the one of the first prism (120) and the second prism (130) having the positioning part (160) is plastic, and a material of the other one of the first prism (120) and the second prism (130) not having the positioning part (160) is glass.

9. The opto-mechanical module according to any one of the preceding claims, wherein the second prism (130) comprises an adjacent surface (SA) adjacent to the first prism (120), and a shortest distance (D3) from an intersection point (P3) of a center ray of the illumination beam (LB) at the adjacent surface (SA) to the first prism (120) is greater than 0.5 mm.

10. The opto-mechanical module (100) according to any one of the preceding claims, wherein the first prism (120) has a first surface (SI), a second surface (S2), and a third surface (S3), and the illumination beam (LB) is transmitted from the first surface (S1) into the first prism (120), and is then transmitted to and exits the second surface (S2) by reflection of the second surface (S2) and the third surface (S3) in sequence.

11. The opto-mechanical module (100) according to claim 10, wherein a refractive power of the third surface (S3) is positive.

12. The opto-mechanical module (100) according to any one of the preceding claims, wherein the second prism (120) has an adjacent surface (SA), a fourth surface (S4), and a fifth surface (S5), the illumination beam (LB) is transmitted from the adjacent surface (SA) into the second prism (130) and exits the fourth surface (S4) to be transmitted to the light valve (110), and the image beam (IB) is transmitted from the fourth surface (S4) into the second prism (130) to be reflected by the adjacent surface (SA) to the fifth surface (S5) and transmitted out of the second prism (130).

13. The opto-mechanical module (100) according to claim 10 or 11, wherein the second prism (130) comprises an adjacent surface (SA) adjacent to the first prism (120), and an included angle between the second surface (S2) and the adjacent surface (SA) is greater than 4 degrees.

14. A projection device, comprising an illumination system (50), an opto-mechanical module (100) as claimed in any one of the preceding claims, and a projection lens (60), wherein the illumination system (50) is configured to provide an illumination beam (LB); the opto-mechanical module (100) is disposed on a transmission path of the illumination beam (LB) and is configured to convert the illumination beam (LB) into an image beam (IB); and the projection lens (60) is disposed on a transmission path of the image beam (IB) and is configured to convert the image beam (IB) into a projection beam (LP).

15. The projection device according to claim 14, wherein the image beam (IB) is transmitted to the projection lens (60) by the second prism (130).
